# EUROPEAN PATENT SPECIFICATION

(11) **EP 1 579 184 B1**
(45) Date of publication and mention of the grant of the patent: **23.08.2006**
(21) Application number: 03773768.1
(22) Date of filing: 19.11.2003
(51) Int. Cl.: G01M 3/32, B29C 49/80

(54) **ARRANGEMENT AND METHOD FOR PERFORMING THE GRIPPING AND SEALING OF THE MOUTH OF HOLLOW OBJECTS FROM INSIDE THE MOUTH, IN CONNECTION WITH THE SEAL TESTING OF THE OBJECT**
ANORDNUNG UND VERFAHREN ZUR DURCHFÜHRUNG DES ERGREIFENS UND ABDICHTENS DER MÜNDUNG HOHLER OBJEKTE VON INNERHALB DER MÜNDUNG HERAUS IN VERBINDUNG MIT DER DICHTUNGSPRÜFUNG DES OBJEKTS
SYSTEME ET PROCEDE PERMETTANT DE SAISIR ET D'ETANCHEIFIER LA BOUCHE D'OBJETS CREUX A PARTIR DE L'INTERIEUR DE LA BOUCHE, EN LIAISON AVEC LE TEST D'ETANCHEITE DE CET OBJET

(30) Priority: 21.11.2002 FI 20022080
(43) Date of publication of application: 28.09.2005
(73) Proprietor: Piispa, Kyösti, 06100 Porvoo (FI)
(72) Inventor: Piispa, Kyösti, 06100 Porvoo (FI)
(74) Representative: LEITZINGER OY
(86) International application number: PCT/FI2003/000884
(87) International publication number: WO 2004/046676

(56) References cited:
- DE-A1- 19 721 529
- GB-A- 2 078 380
- US-A- 3 422 980
- US-A- 3 879 987
- US-A- 4 675 070

## Description

The present invention relates to an arrangement and to a method for performing internal gripping of the mouth of a hollow object and its sealing following the gripping in order to carry out seal testing.

In known methods, the sealing movement is performed first by using a separate moving means, and gripping is performed only after the movement by utilising another moving means. For example, patent no. FI-100825 discloses a gripping head with a sealing cone of hard plastic, which is first brought against the mouth of the object to be tested and test pressure is then supplied inside the object to be tested. It is only after this that the object is gripped by using a fastener inserted in the mouth and an expanding gripping shaft. The fastener is lifted as much as is required by the expansion of the gripping shaft, but it is not used to transfer the object to be tested itself. A weakness of known gripping methods is the very small bulge bringing about the gripping, which requires the use of product-specific parts and an exchange of parts every time when changing over from one product to another, if the inner diameter of the mouth changes. Similarly, a gripping unit provided with a separate moving means is not reasonably applicable to devices using several gripping devices, possibly more than ten. The entity becomes heavy and expensive. Correspondingly, installation into, for example, the existing transfer apparatuses in multi-socket machines for manufacturing plastic containers is complicated and susceptible to failure. In the gripping heads according to FI-patent no. 100825 are in practice used gripping shafts made of silicone. Due to repeated working strokes, cracks are formed with time in the silicone, thus deteriorating the sealing tightness. The problem with the deterioration of tightness is that it causes unfounded rejection of bottles. Because of this, the silicone gripping shafts must be changed after some 10 000 working strokes. Another problem is caused by silicone crumbs entering the bottles in connection with possible fracturing. In addition, the optimal range of use of silicone parts is for mouths having an inner diameter of about 18-20 mm. Larger sizes require structural changes to the sealing part and the gripping shaft.

The aim of the invention is to eliminate these disadvantages and to provide an improved arrangement and method for gripping the mouth of hollow objects provided with at least one mouth from inside the mouth, and for sealing the mouth for seal testing. To achieve the aims of the invention, the arrangement according to the invention is characterised by what is stated in claim 1. The method according to the invention is characterised by what is stated in claim 8.

According to the invention, the gripping of the mouth of a hollow object from the inside is effected by means of a gripping device, in which the outer diameter of the gripping means inserted in the mouth and the force applied to gripping can be adjusted if necessary. By means of a movement following the gripping, a sealing movement can be performed and seal testing can be carried out by utilising, for example, the existing transfer apparatus of machines used for the manufacture of modern plastic packages. The gripping and the movement realised according to the invention make it possible to combine different functions into one entity, also when several gripping devices have to be used simultaneously. By means of the method, for example, simultaneous seal testing of all products in a multihead machine can be carried out at the same time as the products are transferred, for instance, to the conveyor track.

According to the method, this may be achieved by using a gripping device to effect the gripping movement, the gripping means of which have a conical surface and a spreading means adapted to the conical surface of the means, the said spreading means being attached to the moving means. Through an inward movement of the gripping device of the moving means, by means of the conical surfaces, is effected sufficient spreading of the gripping means against the mouth, as required for gripping. The outer diameter of the gripping means in the closed position is adjusted by means of a threaded part in the stem-like part of the spreading means. By screwing the spreading means inwards, initial opening of the gripping means is brought about by the spreading means, and the desired initial position with respect to the outer diameter can be selected. By using a spring-like means between the end of the moving means and the gripping means, by selecting a suitable spring force, which can be adjusted by changing the flexibility of the spring-like means, it is possible to obtain sufficient pressure against the inner surface of the mouth, and once this pressure has been reached, the continuing movement of the moving means will cause the spring-like means to bend, whereby the transfer of the gripping means in the direction of movement of the moving means is brought about. Thus, by means of a simple method is realised combined gripping and movement against the sealing means, which can be utilised, for example, in connection with the machines used for the manufacture of multi-head, efficient, hollow products. Due to the simpleness of the invention, the intermediate piece is so light and small in size that a required number of them can be used simultaneously, depending on the number of sockets in the machine, for example, in combination with the machine's own transfer manipulator.

The invention is described in greater detail in the following, with reference to the accompanying drawings, which show one application of the invention for a method.
- Figure 1: shows a cross-section of the intermediate piece, when the gripping means are in the closed position.
- Figure 2: shows a cross-section of the intermediate piece, when the gripping into the mouth has been carried out using the gripping means.
- Figure 3: shows the situation following gripping.
- Figure 4: shows the gripping means provided with additional parts.

In the example, the body of the gripping device is comprised of a compressed air cylinder 1 and a housing 2. On the piston rod 6 of the cylinder 1 is attached a moving means 7 moving with it, around which is arranged an intermediate piece to be inserted through the mouth of the hollow object, the piece comprising at least two gripping means 4. At the end of the moving means 7 is a spreading means 8 for spreading the gripping means 4 outwards, to provide a grip on the inside of the mouth of the hollow object. On the surface of the body part facing the mouth of the hollow object is a sealing means 9, in which is formed an aperture 10, through which the moving means 7 and intermediate piece extend. The gripping device can be brought close to the mouth 5 of the hollow object in such a way that the moving means 7 and the intermediate piece will extend inside the mouth. The outwards spreading movement of the gripping means 4 is arranged to take place by means of the spreading means 8 through the outward movement of the moving means 7 from the mouth 5 and the bringing of the face of the mouth 5 of the hollow object into tight attachment against the sealing means 9 is arranged to take place by continuing the said outward movement of the moving means once the gripping means have gripped against the inside of the mouth.

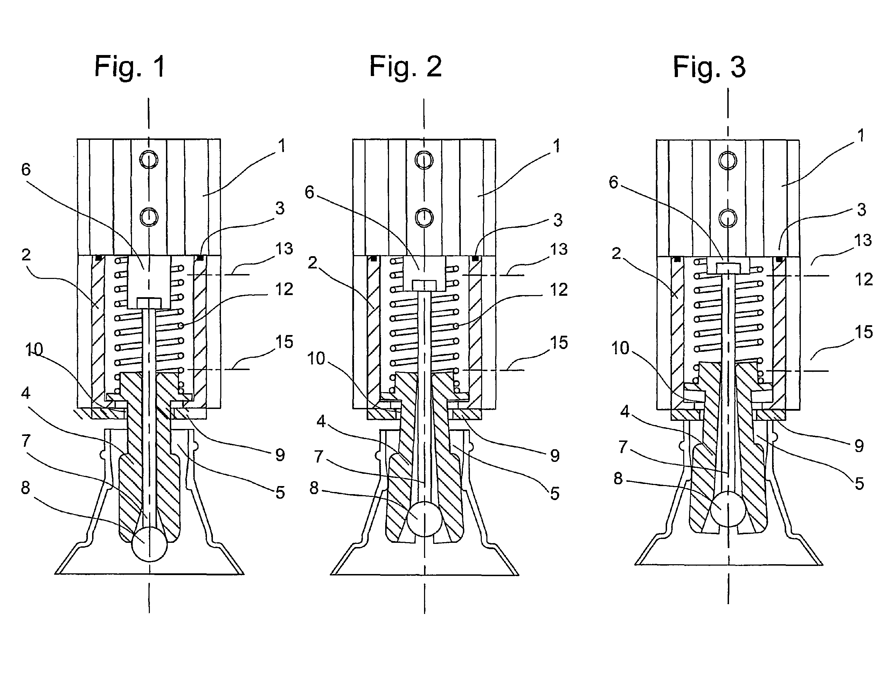

In the example case, the method is used for the combined transfer out of the machine and seal testing of blown plastic bottles. The testing itself is not described here separately. The purpose of the compressed air cylinder 1 is to bring about reciprocating movement. Figure 1 shows a situation where the gripping means 4 of the intermediate piece are in the closed position. Through the inward movement of the cylinder 1, the threaded rod 7 attached to the cylinder rod 6, to which threaded rod the spreading means 8 is attached, brings about an outward, clamp-type movement of the conical surface of the gripping means 4, whereby the tips of the means 4 will open. At this stage, the spring force of the flexible means 12 still prevents the movement of the gripping means 4 in the direction of movement of the cylinder 1 piston (Figure 2). Figure 3 shows a situation where the spring-like means 12 has bent, thus causing the gripping means 4 to move parallel to the cylinder piston, and the mouth 5 of the product has sealed against the sealing means 9.

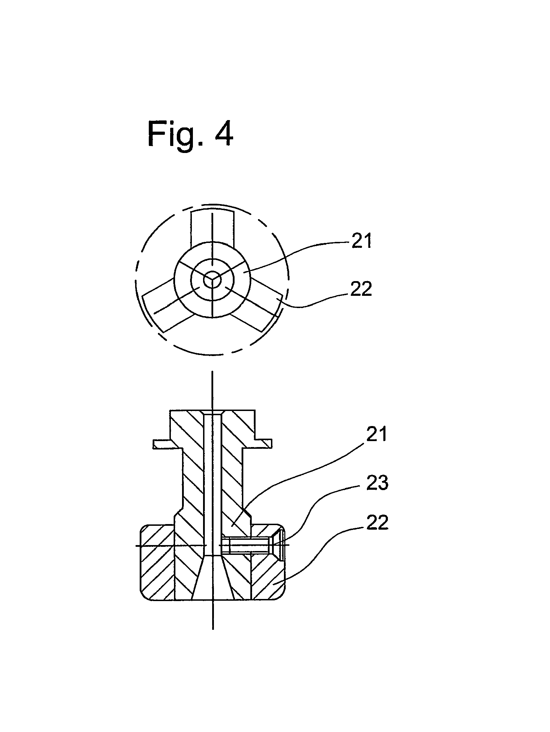

The parts of the gripping means 4 on the side of the cylinder 1 are designed in such a way that they can be interlocked with, for example, the flexible means 12. In this way, the movement of the gripping means 4 can be made such that gripping is possible without the area of the gripping means 4 on the side of the spring-like means 12 spreading to any substantial degree. The aperture 10 at the centre of the sealing element 9 is preferably smaller than the smallest mouth 5 in the seal tested objects for sealing the mouths 5 of products with different diameters against the sealing element 9. This makes possible a considerably wider range of mouths 5 of different sizes, which can be both gripped and seal tested without changing the gripping means 4. It has been found in practice that by means of various additional parts placed on the gripping means 4 of the intermediate piece, a much larger range of use can be obtained than, for example, with the solution according to FI-patent no. 100825. The inner diameter of the hollow objects may be, for example, within the range from 10 to 60 mm without structural changes to the gripping device. This is a considerable advantage when retrofitting the gripping device according to the invention to existing machines. The top part of Figure 4 shows an example of an embodiment of gripping means 21 provided with additional parts 22, as seen from below, and the bottom part shows a cross-sectional view of the same. The additional parts are connected to the gripping means by fixing screws 23. In this embodiment there are three gripping means.

By means of the housing-like piece 2 of the gripping device according to the example, the gripping means 4, the spreading means 8 and the flexible means 12 can be preset correctly, and the above-mentioned parts can be maintained correctly directed with respect to the cylinder 1. Should, for example, a spiral spring be used as the flexible element 12, pre-tensioning is carried out, for example, by dimensioning the interior height of the housing 2 as desired. An adjustable or separately dimensioned intermediate piece against the spring 12 can be used as an aid.

In the gripping device of the method according to the example, part 2 is connected to the cylinder 1 in such a way that the joint is airtight, for example, by placing an O-ring 3 between the cylinder 1 end and the bottom of the housing 2. On the side of the housing 2 is in such a case fixed a compressed air connector 13 for supplying the test pressure, and a pressure sensor 15 for monitoring pressure changes. The sealing element 9 presses airtightly on the face of the housing 2. The movement of the gripping means 4 effected by the flexible means 12 causes the mouth 5 of the product to press against the sealing element 9. In this way is obtained an airtight hollow comprised of the housing 2 and the hollow object. The compressed air used in testing is able to flow through the connector 13 into the housing 2 and the hollow object from the slots between the gripping means 4, whereby seal testing based on pressure change can be carried out.

The gripping means used in the gripping device according to the invention are preferably metal claws rifled on their outer surface, which withstand even as many as hundreds of thousands of working strokes, which is a very significant advantage compared with the service life of about 10 000 working strokes of prior art solutions. Another advantage is the relatively small gripping area formed between the outer surface of the gripping means 4 and the inner surface of the mouth, which is reduced by the rifling of the outer surface of the gripping means, which means that no significant dead space is formed at the gripping point, inside which could remain hidden faults. In the solution according to FI- patent no. 100825, a gripping shaft of silicone forms a considerably large gripping area with the inner surface of the mouth, whereby faults in the gripping area may easily remain unnoticed as the silicone seals them during the test phase.

## Claims

1. An arrangement for gripping the mouth (5) of a hollow object on the inside of the mouth, and for sealing the mouth for seal testing, wherein the arrangement comprises at least one gripping device, which includes a body part (1, 2) to which is connected a moving means (7) arranged to move with respect to the body part, around which moving means is arranged an intermediate piece to be inserted through the mouth of the hollow object, the piece comprising at least two gripping means (4), that at the end of the moving means (7) is a spreading means (8) for spreading the gripping means (4) outwards to provide a grip on the inside of the mouth of the hollow object, that on the surface of the body part facing the mouth of the hollow object is a sealing means (9), in which is formed an aperture (10), through which the moving means (7) and intermediate piece extend, which gripping device can be brought close to the mouth (5) of the hollow object in such a way that the moving means (7) and the intermediate piece will extend inside the mouth (5), and that the outwards spreading movement of the gripping means (4) is arranged to take place by means of the spreading means (8) through the outward movement of the moving means (7) from the mouth, and the bringing of the face of the mouth (5) of the hollow object into tight attachment against the sealing means (9) is arranged to take place by continuing the said outward movement of the moving means (7) once the gripping means (4) have gripped against the inside of the mouth.

2. An arrangement as claimed in claim 1, wherein the gripping device is comprised of a pneumatic cylinder (1), on the piston rod (6) of which is attached a moving means (7) moving with it.

3. An arrangement as claimed in claim 2, wherein between the cylinder (1) and the gripping means (4) is arranged a spring-like means (12).

4. An arrangement as claimed in any of the claims 1 to 3, wherein the initial opening of the gripping means (4) is adjustable.

5. An arrangement as claimed in any of the claims 1 to 4, wherein the force used for the gripping is adjustable.

6. An arrangement as claimed in any of the claims 1 to 5, wherein the arrangement comprises several gripping devices.

7. An arrangement as claimed in any of the above claims, wherein the gripping means of the gripping device are of metal.

8. A method for gripping the mouth (5) of a hollow object, and for sealing the mouth for seal testing, in which method the gripping is effected from the inside of the mouth, wherein for the gripping is used a gripping device, which includes a body part (1, 2) to which is connected a moving means (7) arranged to move with respect to the body part, around which moving means is arranged an intermediate piece to be inserted through the mouth of the hollow object, the piece comprising at least two gripping means (4), that at the end of the moving means (7) is a spreading means (8) for spreading the gripping means (4) outwards, to provide a grip on the inside of the mouth of the hollow object, that on the surface of the body part facing the mouth of the hollow object is a sealing means (9), in which is formed an aperture (10), through which the moving means (7) and intermediate piece extend, in which method the gripping device is brought close to the mouth (5) of the hollow object in such a way that the moving means (7) and the intermediate piece will extend inside the mouth, and that in the method, the outwards spreading movement of the gripping means (4) is arranged to take place by means of the spreading means (8) through the outward movement of the moving means (7) from the mouth, and the bringing of the face of the mouth (5) of the hollow object into tight attachment against the sealing means (9) takes place by continuing the said outward movement of the moving means (7) once the gripping means (4) have gripped against the inside of the mouth.

9. A method as claimed in claim 8, wherein the gripping device used in the method is comprised of a pneumatic cylinder (1), on the piston rod (6) of which is attached a moving means (7) moving with it.

## Patentansprüche

1. Anordnung zum Ergreifen des Ausgangs (5) eines hohlen Gegenstands an der Innenseite des Ausgangs und zum Abdichten des Ausgangs zur Dichtigkeitsprüfung, wobei die Anordnung mindestens eine Greifvorrichtung umfasst, die ein Körperteil (1, 2) umfasst, mit welchem ein sich bewegendes Mittel (7) verbunden ist, das sich in Bezug auf das Körperteil bewegen kann, wobei um das sich bewegende Mittel herum ein durch den Ausgang des hohlen Gegenstands hindurch einzuführendes Zwischenstück angeordnet ist und das Stück mindestens zwei Greifmittel (4) umfasst, sich an dem Ende des sich bewegendes Mittels (7) ein Spreizmittel (8) zum Spreizen der Greifmittel (4) nach außen zwecks Bereitstellens einer Greifwirkung an der Innenseite des Ausgangs des hohlen Gegenstands befindet, sich auf der zu dem Ausgang des hohlen Gegenstands weisenden Fläche des Körperteils ein Abdichtmittel (9) befindet, in dem eine Öffnung (10) ausgebildet ist, durch welche das sich bewegende Mittel (7) und das Zwischenstück verlaufen, wobei die Greifvorrichtung in einer solchen Weise nahe an den Ausgang (5) des hohlen Gegenstands heran gebracht werden kann, dass das sich bewegende Mittel (7) und das Zwischenstück in den Ausgang (5) hinein ragen, und die nach außen spreizende Bewegung der Greifmittel (4) mit Hilfe des Spreizmittels (8) durch die Bewegung des sich bewegenden Mittels (7) von dem Ausgang nach außen stattfinden kann und die Vorderseite des Ausgangs (5) des hohlen Gegenstands durch Fortsetzen der Bewegung des sich bewegenden Mittels (7) nach außen in straffe Anlage gegen das Abdichtmittel (9) gebracht werden kann, sobald die Greifmittel (4) gegen die Innenseite des Ausgang gegriffen haben.

2. Anordnung nach Anspruch 1, wobei die Greifvorrichtung einen Pneumatikzylinder (1) umfasst, an dessen Kolbenstange (6) ein sich bewegendes Mittel (7) befestigt ist, das sich mit dieser bewegt.

3. Anordnung nach Anspruch 2, wobei zwischen dem Zylinder (1) und den Greifmitteln (4) ein federartiges Mittel (12) angeordnet ist.

4. Anordnung nach einem der Ansprüche 1 bis 3, wobei die anfängliche Öffnung der Greifmittel (4) einstellbar ist.

5. Anordnung nach einem der Ansprüche 1 bis 4, wobei die für den Greifvorgang angewandte Kraft einstellbar ist.

6. Anordnung nach einem der Ansprüche 1 bis 5, wobei die Anordnung mehrere Greifvorrichtungen umfasst.

7. Anordnung nach einem der obigen Ansprüche, wobei die Greifmittel der Greifvorrichtung aus Metall sind.

8. Verfahren zum Ergreifen des Ausgangs (5) eines hohlen Gegenstands und zum Abdichten des Ausgangs zur Dichtigkeitsprüfung, wobei der Greifvorgang bei diesem Verfahren von der Innenseite des Ausgangs aus erfolgt, wobei für den Greifvorgang eine Greifvorrichtung verwendet wird, die ein Körperteil (1, 2) umfasst, mit welchem ein sich bewegendes Mittel (7) verbunden ist, das sich in Bezug auf das Körperteil bewegen kann, wobei um das sich bewegende Mittel herum ein durch den Ausgang des hohlen Gegenstands hindurch einzuführendes Zwischenstück angeordnet ist und das Stück mindestens zwei Greifmittel (4) umfasst, sich an dem Ende des sich bewegendes Mittels (7) ein Spreizmittel (8) zum Spreizen der Greifmittel (4) nach außen zwecks Bereitstellens einer Greifwirkung an der Innenseite des Ausgangs des hohlen Gegenstands befindet, sich auf der zu dem Ausgang des hohlen Gegenstands weisenden Fläche des Körperteils ein Abdichtmittel (9) befindet, in dem eine Öffnung (10) ausgebildet ist, durch welche das sich bewegende Mittel (7) und das Zwischenstück verlaufen, wobei die Greifvorrichtung bei diesem Verfahren in einer solchen Weise nahe an den Ausgang (5) des hohlen Gegenstands heran gebracht werden kann, dass das sich bewegende Mittel (7) und das Zwischenstück in den Ausgang (5) hinein ragen, und die nach außen spreizende Bewegung der Greifmittel (4) mit Hilfe des Spreizmittels (8) durch die Bewegung des sich bewegenden Mittels (7) von dem Ausgang nach außen stattfinden kann und die Vorderseite des Ausgangs (5) des hohlen Gegenstands durch Fortsetzen der Bewegung des sich bewegenden Mittels (7) nach außen in straffe Anlage gegen das Abdichtmittel (9) gebracht werden kann, sobald die Greifmittel (4) gegen die Innenseite des Ausgang gegriffen haben.

9. Verfahren nach Anspruch 8, wobei die bei dem Verfahren verwendete Greifvorrichtung einen Pneumatikzylinder (1) umfasst, an dessen Kolbenstange (6) ein sich bewegendes Mittel (7) befestigt ist, das sich mit dieser bewegt.

## Revendications

1. Agencement pour la saisie de la bouche (5) d'un objet creux à l'intérieur de la bouche, et pour l'étanchéification de la bouche pour tester l'étanchéité, dans lequel l'agencement comprend au moins un dispositif de saisie qui comprend une partie de corps (1, 2) à laquelle est connecté un moyen de déplacement (7) agencé pour se déplacer par rapport à la partie de corps, autour duquel moyen de déplacement est agencée une partie intermédiaire devant être insérée à travers la bouche de l'objet creux, la partie comprenant au moins deux moyens de saisie (4), qu'un moyen d'écartement (8) pour écarter les moyens de saisie (4) vers l'extérieur pour fournir une préhension à l'intérieur de la bouche de l'objet creux se trouve à l'extrémité du moyen de déplacement (7), qu'un moyen d'étanchéification (9) dans lequel est formée une ouverture (10) à travers laquelle le moyen de déplacement (7) et la partie intermédiaire s'étendent, se trouve sur la surface de la partie de corps faisant face à la bouche de l'objet creux, lequel dispositif de saisie peut être amené près de la bouche (5) de l'objet creux d'une manière telle que le moyen de déplacement (7) et la partie intermédiaire s'étendent à l'intérieur de la bouche (5), et que le mouvement d'écartement vers l'extérieur des moyens de saisie (4) est agencé pour avoir lieu au moyen du moyen d'écartement (8) par le mouvement vers l'extérieur du moyen de déplacement (7) depuis la bouche, et l'amenée de la face de la bouche (5) de l'objet creux en fixation serrée contre le moyen d'étanchéification (9) est agencée pour avoir lieu en continuant ledit mouvement vers l'extérieur du moyen de déplacement (7), une fois que les moyens de saisie (4) ont une préhension contre l'intérieur de la bouche.

2. Agencement selon la revendication 1, dans lequel le dispositif de saisie est constitué d'un cylindre pneumatique (1), sur la tige de piston (6) duquel est relié un moyen de déplacement (7) se déplaçant avec lui.

3. Agencement selon la revendication 2, dans lequel un moyen de type ressort (12) est agencé entre le cylindre (1) et les moyens de saisie (4).

4. Agencement selon l'une quelconque des revendications 1 à 3, dans lequel l'ouverture initiale des moyens de saisie (4) est ajustable.

5. Agencement selon l'une quelconque des revendications 1 à 4, dans lequel la force utilisée pour la saisie est ajustable.

6. Agencement selon l'une quelconque des revendications 1 à 5, dans lequel l'agencement comprend plusieurs dispositifs de saisie.

7. Agencement selon l'une quelconque des revendications ci-dessus, dans lequel les moyens de saisie du dispositif de saisie sont en métal.

8. Procédé pour la saisie de la bouche (5) d'un objet creux, et pour l'étanchéification de la bouche pour tester l'étanchéité, dans lequel procédé la saisie est réalisée depuis l'intérieur de la bouche, dans lequel un dispositif de saisie qui comprend une partie de corps (1, 2) à laquelle est connecté un moyen de déplacement (7) agencé pour se déplacer par rapport à la partie de corps, autour duquel moyen de déplacement est agencée une partie intermédiaire devant être insérée à travers la bouche de l'objet creux, est utilisé pour la saisie, la partie comprenant au moins deux moyens de saisie (4), qu'un moyen d'écartement (8) pour écarter les moyens de saisie (4) vers l'extérieur pour fournir une préhension à l'intérieur de la bouche de l'objet creux se trouve à l'extrémité du moyen de déplacement (7), qu'un moyen d'étanchéification (9) dans lequel est formée une ouverture (10) à travers laquelle le moyen de déplacement (7) et la partie intermédiaire s'étendent, se trouve sur la surface de la partie de corps faisant face à la bouche de l'objet creux, dans lequel procédé le dispositif de saisie est amené près de la bouche (5) de l'objet creux d'une manière telle que le moyen de déplacement (7) et la partie intermédiaire s'étendent à l'intérieur de la bouche, et que dans le procédé, le mouvement d'écartement vers l'extérieur des moyens de saisie (4) est agencé pour avoir lieu au moyen du moyen d'écartement (8) par le mouvement vers l'extérieur du moyen de déplacement (7) depuis la bouche, et l'amenée de la face de la bouche (5) de l'objet creux en fixation serrée contre le moyen d'étanchéification (9) a lieu en continuant ledit mouvement vers l'extérieur du moyen de déplacement (7), une fois que les moyens de saisie (4) ont une préhension contre l'intérieur de la bouche.

9. Procédé selon la revendication 8, dans lequel le dispositif de saisie utilisé dans le procédé est constitué d'un cylindre pneumatique (1), sur la tige de piston (6) duquel est relié un moyen de déplacement (7) se déplaçant avec lui.
